# EUROPÄISCHE PATENTSCHRIFT

(11) **EP 1 301 359 B1**
(45) Veröffentlichungstag und Bekanntmachung des Hinweises auf die Patenterteilung: **09.08.2006**
(21) Anmeldenummer: 01955301.5
(22) Anmeldetag: 07.06.2001
(51) Int. Cl.: B60B 35/08

(54) **FAHRZEUGACHSE BESTEHEND AUS EINEM ACHSROHR MIT ANGESCHWEISSTEM ACHSTUMMEL**
VEHICLE AXLE COMPRISING AN AXLE TUBE CONTAINING A WELDED AXLE END
PONT DE VEHICULE CONSTITUE D'UNE TROMPETTE A TOURILLONS RAPPORTES PAR SOUDURE

(30) Priorität: 06.07.2000 DE 10032910; 04.12.2000 DE 10060312
(43) Veröffentlichungstag der Anmeldung: 16.04.2003
(73) Patentinhaber: Otto Sauer Achsenfabrik GmbH, 63856 Bessenbach-Keilberg (DE)
(72) Erfinder: STRECK, Hans-Dieter, 58509 Lüdenscheid (DE)
(74) Vertreter: KEIL & SCHAAFHAUSEN Patentanwälte
(86) Internationale Anmeldenummer: PCT/EP2001/006438
(87) Internationale Veröffentlichungsnummer: WO 2002/002353

(56) Entgegenhaltungen:
- DE-C- 864 408
- DE-C- 876 697
- GB-A- 911 721
- US-A- 6 039 336
- PATENT ABSTRACTS OF JAPAN vol. 017, no. 664 (M-1523), 8. Dezember 1993 (1993-12-08) & JP 05 221203 A (HINO MOTORS LTD), 31. August 1993 (1993-08-31)

## Beschreibung

Die Erfindung betrifft eine Fahrzeugachse, insbesondere Starrachse, für Lastkraftwagen und deren Anhänger nach dem Oberbegriff des Anspruchs 1.

Es sind Fahrzeugachsen bekannt, die für Lastkraftwagen und deren Anhänger verwendet werden und ein Achsrohr aufweisen, an dessen beiden Enden geschmiedete Achsstummel durch Reibschweißen befestigt sind. Um verhältnismäßig dünnwandige Rohre verwenden zu können, ist es bekannt, der Achseinbindung dienende Bereiche des Achsrohres dadurch zu verstärken, dass dort halbschalen oder Vollschalen außen angeschweißt werden (vgl. die Gattungsbildende EP 600 198 A2). Eine solche Fahrzeugachse ist aufwendig in der Herstellung.

Aus der DE 876 697 C und der DE 864 408 C ist jeweils eine für Schienenfahrzeuge bestimmte Hohlwelle mit Sitzflächen für die Naben der Radkörper bekannt, welche aus einem Mittelstück und zwei Endstücken in zwei Schweißnähten zusammengesetzt ist, wobei jede der beiden Schweißnähte in der Mitte des Nabensitzes liegt. Hierdurch sollen eine Reihe von Nachteilen beseitigt werden, welche eine Anordnung der Schweißnähte außerhalb der Nabensitze mit sich bringen.

Aufgabe der Erfindung ist es, eine für Lastkraftwagen und deren Anhänger geeignete Fahrzeugachse der eingangs genannten Art so zu verbessern, dass bei geringem Gewicht und ohne zusätzliche äußere Teile eine hohe Stabilität erreicht wird.

Diese Aufgabe wird bei einer Fahrzeugachse der eingangs genannten Art erfindungsgemäß dadurch gelöst, dass die Merkmale des kennzeichnenden Teils des Anspruchs 1 vorgesehen sind.

Somit ist eine Gewichtsoptimierung bei hoher Stabilität erreichbar ohne außen zusätzliche Verstärkungselemente befestigen zu müssen.

Besonders vorteilhaft ist es hierbei, wenn zwischen den zwei Abstützungspunkten das Achsrohr eine Trennstelle aufweist, deren zwei Trennflächen insbesondere durch Reibschweißen oder Laserschweißen aneinander gefügt sind. Durch eine Trennung des Achsrohres im Bereich der neutralen Zone wird es möglich, herstellungstechnisch auf einfache Weise das Achsrohr im Bereich der Achseinbindung im Durchmesser aufzuweiten und damit zu verstärken. Hierbei können beide der Trennstelle zugewandten Enden der Rohrabschnitte aufgeweitet sein.

Alternativ kann aber auch der Achsstummel bis zur Trennstelle reichen und das innere Ende des Achsstummels und das äußere Ende des Achsrohres aufgeweitet sein.

Besonders vorteilhaft ist es, wenn in den Bereichen der Aufweitungen der Enden die Rohrwand insbesondere durch Stauchen zusätzlich Material enthält, um die Dicke der Rohrwand im aufgeweiteten Bereich beizubehalten.

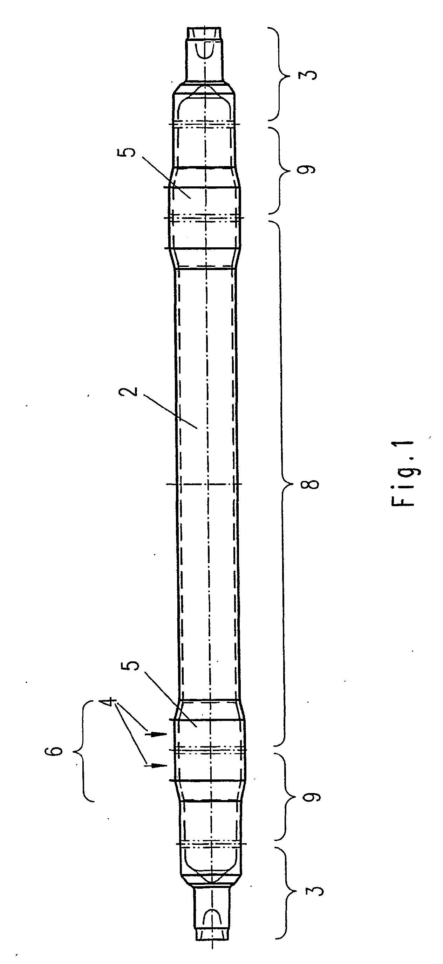

Zwei Ausführungsbeispiele der Erfindung sind in den Zeichnungen dargestellt und werden im folgenden näher beschrieben. Es zeigen
- Fig. 1: eine Ansicht des Achsenrohlings im gefügten Zustand,
- Fig. 2: der Endbereich des Achsenrohlings im noch nicht gefügten Zustand in einer ersten Ausführungsform, und
- Fig. 3: den Endbereich des Achsenrohlings in einer zweiten Ausführungsform.

Die Fahrzeugachse 1 weist ein Achsrohr 2 auf, an dessen beiden Enden jeweils ein Achsstummel 3 befestigt ist, der durch Schmieden oder Fließpressen hergestellt ist. Das Befestigen der Achsstummel 3 an dem Achsrohr 2 erfolgt vorzugsweise durch Reibschweißung oder Laserscheißung.

Das Achsrohr 2 ist nahe seiner beiden Enden mit der nicht dargestellten Achseinbindung verschweißt. In einem Bereich 6 der Abstützungspunkte 4 bildet das Achsrohr 2 eine Aufweitung 5, das heißt in diesem Bereich 6 ist der Innen- und Außendurchmesser des Achsrohres 2 vergrößert. Diese Aufweitung 5 kann durch die unterschiedlichsten Aufweitungsverfahren, z.B. durch Innenhochdruck, erzeugt werden.

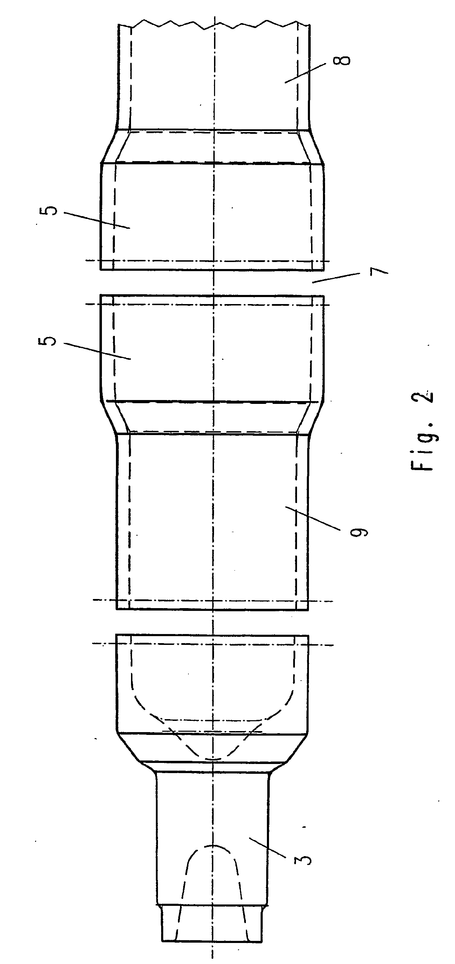

Die Aufweitung 5 kann, wie in Fig. 2 gezeigt, im ersten Ausführungsbeispiel dadurch hergestellt werden, dass in dem Bereich 6 zwischen den zwei Abstützungspunkten 4 in Höhe der neutralen Zone und damit mittig zwischen den Abstützungspunkten 4 das Achsrohr 2 getrennt ist. Diese Trennstelle 7 ist in Fig. 2 ersichtlich, das heißt von einem inneren Rohrabschnitt 8 ist ein äußerer Rohrabschnitt 9 abgeteilt. Hierdurch bilden die zwei Rohrabschnitte 8 und 9 jeweils eine Hälfte der Aufweitung 5.

Diese zwei Aufweitungshälften sind einfach herzustellen, da die Aufweitungen von den zwei einander zugewandten Enden der Rohrabschnitte 8 und 9 her durch Umformen erzeugt werden können. Hierbei kann auf einfache Weise zusätzlich dafür gesorgt werden, dass beim Aufweiten der zwei Rohrenden die Rohrwand durch Stauchen zusätzlich Material erhält und damit die Dicke der Rohrwand im aufgeweiteten Bereich nicht dünner wird, sondern die gleiche Stärke beibehält wie auch die übrige Rohrwand.

Somit ist im Ausführungsbeispiel nach Fig. 2 zwischen dem Achsstummel 3 und dem inneren Rohrabschnitt 8 ein zusätzlicher Rohrabschnitt 9 angeordnet, wobei die Trennstelle 7 zwischen den beiden Rohrabschnitten 8 und 9 im Bereich der neutralen Zone mittig zwischen den Abstützpunkten 4 liegt.

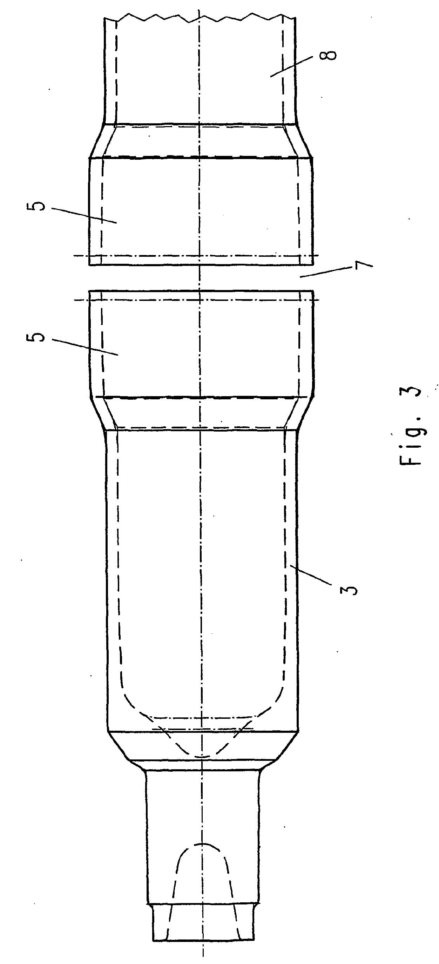

Das in Fig. 3 dargestellte zweite Ausführungsbeispiel unterscheidet sich von dem ersten dadurch, dass der äußere Rohrabschnitt 9 von dem Achsstummel 3 mittig übernommen wird. Es ist wiederum eine Trennstelle 7 vorhanden, die mittig zwischen den Abstützpunkten 4 im Bereich der neutralen Zone liegt. An dieser Trennstelle 7 setzt zu der einen Seite der Achsstummel 3 und zu der anderen Seite der Rohrabschnitt 8 an. Das dem Rohrabschnitt 8 zugewandte Ende des Achsstummels 3 ist in gleicher Weise aufgeweitet wie das dem Achsstummel 3 zugewandte Ende des Rohrabschnitts 8. Die Aufweitung 5 des Rohrabschnitts 8 erfolgt wie beim ersten Ausführungsbeispiel vom Ende her durch Umformen und die Aufweitung des Achsstummels 3 durch Schmieden oder Fließpressen.

Bei beiden Ausführungsformen ist dafür gesorgt, dass im Bereich der Aufweitungen genügend Material in die Wand eingeschoben wird, um die Wanddicke beizubehalten, und ferner ist sichergestellt, dass im Bereich der Aufweitung 5 die Innenwand keine Deformierungen aufweist. In beiden Ausführungen werden die Trennflächen aneinandergefügt, vorzugsweise durch Reibschweißen oder Laserschweißen.

## Patentansprüche

1. Fahrzeugachse (1), insbesondere Starrachse, für Lastkraftwagen und deren Anhänger, mit einem Achsrohr (2), an dessen beiden Enden jeweils ein Achsstummel (3) befestigt ist, auf dem ein Rad lagerbar ist, wobei jeweils nahe dem Achsstummel (3) das Achsrohr (6) durch eine Achseinbindung belastbar ist, deren zwei Abstützungspunkte (4) in einem Abstand voneinander liegen, **dadurch gekennzeichnet, dass** das Achsrohr (2) in den der Achseinbindung dienenden Bereichen (6) und zwischen deren beiden Abstützungspunkten (4) zu einem größeren Durchmesser aufgeweitet ist.

2. Fahrzeugachse nach Anspruch **1, dadurch gekennzeichnet, dass** zwischen den zwei Abstützungspunkten (4) das Achsrohr (2) eine Trennstelle (7) aufweist, deren zwei Trennflächen, insbesondere durch Reibschweißen oder Laserschweißen, aneinander gefügt sind.

3. Fahrzeugachse nach Anspruch 2, **dadurch gekennzeichnet, dass** an der Trennstelle (7) das Achsrohr (2) geteilt ist und beide der Trennstelle (7) zugewandten Enden der Rohrabschnitte (8, 9) aufgeweitet sind.

4. Fahrzeugachse nach Anspruch 2, **dadurch gekennzeichnet, dass** der Achsstummel (3) bis zur Trennstelle (7) reicht und das innere Ende des Achsstummels (3) und das äußere Ende des Achsrohres (2) aufgeweitet sind.

5. Fahrzeugachse nach einem der vorherigen Ansprüche, **dadurch gekennzeichnet, dass** in den Bereichen der Aufweitungen (5) die Rohrwand insbesondere durch Stauchen zusätzlich Material enthält, um die Dicke der Rohrwand im aufgeweiteten Bereich beizubehalten.

## Claims

1. A vehicle axle (1), in particular, a rigid axle, for use in trucks and trailers thereof, comprising an axle tube (2) at the two ends of which is respectively fixed an axle stub (3) suitable to have a wheel disposed thereon wherein, respectively in the vicinity of the axle stub (3), the axle tube (6) is able to carry load due to an axle wrapping the two support points (4) of which are disposed in spaced relationship, **characterized in that** the axle tube (2), in the areas (6) serving the wrapping and in the space between the two support points (4) thereof, is expanded such that the diameter thereof is enlarged.

2. A vehicle axle according to claim 1, **characterized in that** the axle tube (2) between the two support points (4) comprises a partition (7), the two separating faces of which are joined together especially by abrasive friction welding or by laser welding.

3. A vehicle axle according to claim 2, **characterized in that** the axial tube (2) at the partition (7) thereof is divided and that both ends of the tubular sections (8, 9) facing the partition (7) are expanded.

4. A vehicle axle according to claim 2, **characterized in that** the axle stub (3) extends down to the partition (7) and that the inner end of the axle stub (3) and the outer end of the axle tube (2) are expanded.

5. A vehicle axle according to any one of the preceding claims, **characterized in that** the tubular wall, in the areas of expansion (5), especially by upsetting, contains additional material to maintain the strength of the tubular wall in the expanded area.

## Revendications

1. Essieu de véhicule (1), en particulier essieu rigide pour des camions et leurs remorques, comportant un tube d'essieu (2), à tous les deux extrémités duquel est respectivement fixé une fusée d'essieu (3) permettant d'accueillir une roue, le tube d'essieu (6) au voisinage de la fusée d'essieu (3) étant capable de charge à cause d'un emballage de l'essieu, les deux points d'appui (4) duquel sont disposé à distance, **caractérisé en ce que** le tube d'essieu (2), dans les régions (6) servant l'emballage de l'essieu et dans l'espace entre son deux points d'appui (4), est élargi en formant un diamètre plus grand.

2. Essieu de véhicule selon la revendication 1, **caractérisé en ce que** le tube d'essieu (2) comporte un séparateur (7) entre les deux points d'appui (4) les deux surfaces duquel sont joints en particulier par soudage à friction ou soudage à laser.

3. Essieu de véhicule selon la revendication 2, **caractérisé en ce que** le tube d'essieu est divisé au séparateur (7) et que les deux extrémités des sections tubulaires (8, 9) faisant face au séparateur sont élargis.

4. Essieu de véhicule selon la revendication 2, **caractérisé en ce que** la fusée d'essieu (3) s'étend au séparateur (7) et que l'extrémité intérieur de la fusée d'essieu (3) et l'extrémité extérieur du tube d'essieu (2) sont élargis.

5. Essieu de véhicule selon l'une des revendications précédentes, **caractérisé en ce que** la paroi tubulaire dans les régions élargies (5), particulièrement par refoulement, contient de la matière additionnelle pour maintenir l'épaisseur de la paroi tubulaire dans la région élargie.
